(19) Europäisches Patentamt
European Patent Office
Office européen des brevets

(11) **EP 3 919 443 A1**

(12) **EUROPEAN PATENT APPLICATION**
published in accordance with Art. 153(4) EPC

(43) Date of publication:
**08.12.2021 Bulletin 2021/49**

(51) Int Cl.:
***C01G 23/047*** (2006.01)  ***H01G 9/20*** (2006.01)

(21) Application number: **20747767.0**

(22) Date of filing: **27.01.2020**

(86) International application number:
**PCT/JP2020/002810**

(87) International publication number:
**WO 2020/158676 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2019 JP 2019016058**

(71) Applicant: **Zeon Corporation Tokyo 100-8246 (JP)**

(72) Inventor: **SHIMIZU, Motohiro Tokyo 100-8246 (JP)**

(74) Representative: **Ehlich, Eva Susanne Maiwald Patentanwalts- und Rechtsanwaltsgesellschaft mbH Elisenhof Elisenstraße 3 80335 München (DE)**

(54) **TITANIUM DIOXIDE PASTE, POROUS SEMICONDUCTOR ELECTRODE SUBSTRATE, PHOTOELECTRODE, AND DYE-SENSITIZED PHOTOVOLTAIC CELL**

(57)     Provided is a titanium dioxide paste that can form a porous semiconductor layer having excellent close adherence with a conductive substrate. The titanium dioxide paste contains titanium dioxide nanoparticles and water, and has a pH of not lower than 2.6 and not higher than 3.5.

## FIG. 1

**Description**

TECHNICAL FIELD

The present disclosure relates to a titanium dioxide paste, a porous semiconductor electrode substrate, a photoelectrode, and a dye-sensitized solar cell.

BACKGROUND

In recent years, solar cells have been attracting interest as photoelectric conversion elements that convert light energy to electrical power. Among solar cells, dye-sensitized solar cells are attracting interest for reasons such as that they can be expected to have lighter weight than silicon solar cells and the like, they can generate electricity stably over a wide illuminance range, and they can be produced using comparatively cheap materials without the need for large scale equipment.

A dye-sensitized solar cell normally has a structure in which a dye-sensitized electrode (photoelectrode), an electrolyte layer, and a counter electrode including a catalyst layer are arranged in this order.

A dye-sensitized electrode included in a dye-sensitized solar cell is produced by, for example, forming a porous semiconductor layer formed of semiconductor nanoparticles such as titanium dioxide nanoparticles on a conductive substrate to produce a porous semiconductor electrode substrate, and then causing adsorption of a sensitizing dye or the like to the porous semiconductor layer.

The conductive substrate used in production of the porous semiconductor electrode substrate may, for example, be a substrate that is obtained by forming a conductive layer formed of a conductive material such as indium-tin complex oxide (ITO) on a support (base material) formed of an inorganic material (for example, glass) or an organic material (for example, plastic).

In a case in which a conductive substrate that includes a support formed of an inorganic material such as glass is used, a porous semiconductor layer can be formed on the conductive substrate by implementing an application step of applying a paste (or viscous dispersion liquid) that contains semiconductor nanoparticles and a binder for thickening onto the conductive substrate and subsequently implementing a baking step of baking at high-temperature (450°C or higher) to burn off the binder.

An organic material such as a plastic may be used as a support of a conductive substrate instead of an inorganic material such as glass from a viewpoint of producing a dye-sensitized solar cell having excellent flexibility.

In a case in which a conductive substrate that includes a support formed of an organic material such as a plastic is used, it is necessary for a porous semiconductor layer to be formed on the conductive substrate at a low temperature (for example, 160°C or lower) that is within a heat resistant temperature range of the organic material.

For example, Patent Literature (PTL) 1 reports that when a viscous dispersion liquid that contains water as a dispersion medium, anatase crystalline titanium dioxide nanoparticles having an average particle diameter within a specific range, and brookite crystalline titanium dioxide nanoparticles having an average particle diameter within a specific range and that has a solid content concentration and viscosity that are within specific ranges is used as the paste mentioned above, it is possible to accurately form a porous semiconductor layer on a conductive substrate including a support formed of a plastic (for example, on a transparent conductive plastic film) at low-temperature.

CITATION LIST

Patent Literature

PTL 1: WO2016/006227A1

SUMMARY

(Technical Problem)

In dye-sensitized solar cells, there are instances in which electrolyte solution erodes an interface between a porous semiconductor layer and a conductive substrate and thereby causes peeling of the porous semiconductor layer from the conductive substrate. From a viewpoint of inhibiting peeling of the porous semiconductor layer from the conductive substrate in this manner, it is necessary for the porous semiconductor layer to have good close adherence with the conductive substrate.

However, there is room for improvement of a porous semiconductor layer formed according to the conventional technique described above in terms of close adherence with a conductive substrate.

Accordingly, one object of the present disclosure is to provide a titanium dioxide paste that can form a porous semiconductor layer having excellent close adherence with a conductive substrate.

Another object of the present disclosure is to provide a porous semiconductor electrode substrate having excellent close adherence of a porous semiconductor layer and a conductive substrate.

Yet another object of the present disclosure is to provide a photoelectrode and a dye-sensitized solar cell that include this porous semiconductor electrode substrate.

(Solution to Problem)

The inventor conducted diligent investigation with the aim of solving the problem set forth above. The inventor discovered that a porous semiconductor layer having excellent close adherence with a conductive substrate can be formed by using a titanium dioxide paste that contains titanium dioxide nanoparticles and water and that has a pH within a specific range, and, in this manner, the inventor completed the present disclosure.

Specifically, the present disclosure aims to advantageously solve the problem set forth above, and a presently disclosed titanium dioxide paste comprises titanium dioxide nanoparticles and water, and has a pH of not lower than 2.6 and not higher than 3.5. When a titanium dioxide paste contains titanium dioxide nanoparticles and water and has a pH within the specific range set forth above in this manner, the titanium dioxide paste can form a porous semiconductor layer having excellent close adherence with a conductive substrate.

For the presently disclosed titanium dioxide paste, it is preferable that a curve indicating a frequency distribution obtained through particle size distribution measurement, by mass, of the titanium dioxide nanoparticles has at least two peaks. When a curve indicating a frequency distribution obtained through particle size distribution measurement, by mass, of the titanium dioxide nanoparticles has at least two peaks in this manner, close adherence of a porous semiconductor layer and a conductive substrate can be further increased, and photoelectric conversion efficiency of a dye-sensitized solar cell can be increased.

Note that the curve indicating a frequency distribution obtained through particle size distribution measurement, by mass, of the titanium dioxide nanoparticles is obtained through measurement of the presently disclosed titanium dioxide paste by ultrasound attenuation spectroscopy.

The reason that close adherence of a porous semiconductor layer and a conductive substrate can be further increased and photoelectric conversion efficiency of a dye-sensitized solar cell can be increased as a result of at least two peaks being present on the curve indicating a frequency distribution obtained through particle size distribution measurement, by mass, of the titanium dioxide nanoparticles is as follows. In a situation in which the curve indicating a frequency distribution obtained through particle size distribution measurement has two peaks that are a peak corresponding to coarse particles and a peak corresponding to fine particles, for example, the fine particles pack into gaps between the coarse particles such that a porous semiconductor layer having a high level of packing is obtained. As a result, contact between the porous semiconductor layer and a conductive substrate is a state similar to surface contact, rather than point contact, and close adherence between the porous semiconductor layer and the conductive substrate improves. Moreover, improvement of packing of the porous semiconductor layer can increase photoelectric conversion efficiency of a dye-sensitized solar cell by inhibiting transmission of sunlight and enabling effective use of sunlight.

For the presently disclosed titanium dioxide paste, it is preferable that the at least two peaks include a fine particle peak having a peak top at a particle diameter of not less than 10 nm and not more than 40 nm and a coarse particle peak having a peak top at a particle diameter of not less than 60 nm and not more than 200 nm. When the at least two peaks include a fine particle peak and a coarse particle peak having peak tops within the specific ranges set forth above in this manner, close adherence of a porous semiconductor layer and a conductive substrate can be even further increased, and photoelectric conversion efficiency of a dye-sensitized solar cell can be further increased.

For the presently disclosed titanium dioxide paste, it is preferable that a ratio of frequency at the peak top of the coarse particle peak relative to frequency at the peak top of the fine particle peak (frequency at peak top of coarse particle peak/frequency at peak top of fine particle peak) is more than 1/3. When a ratio of the frequency at the peak top of the coarse particle peak and the frequency at the peak top of the fine particle peak (frequency at peak top of coarse particle peak/frequency at peak top of fine particle peak) is more than the specific value set forth above in this manner, close adherence of a porous semiconductor layer and a conductive substrate can be even further increased, and photoelectric conversion efficiency of a dye-sensitized solar cell can be even further increased.

Note that the ratio of the frequencies at the peak tops (frequency at peak top of coarse particle peak/frequency at peak top of fine particle peak) can be calculated from a ratio of the heights of the respective peak tops of the coarse particle peak and the fine particle peak.

The presently disclosed titanium dioxide paste preferably has a solid content concentration of not less than 45 mass% and not more than 55 mass%. When the solid content concentration of the titanium dioxide paste is within the specific range set forth above in this manner, the titanium dioxide paste can be provided with suitable viscosity (rheological properties and thixotropy), and screen printing properties of the titanium dioxide paste can be enhanced.

Note that the solid content concentration of the titanium dioxide paste can be measured by mass loss on drying (drying at 180°C for 1 hour). Moreover, the solid content concentration of the titanium dioxide paste can be calculated from the specific gravity of each component contained in the titanium dioxide paste and the specific gravity of the titanium dioxide paste measured using a specific gravity cup.

The presently disclosed titanium dioxide paste preferably has a viscosity at 25°C of not less than 10 Pa·s and not more than 24 Pa·s. When the viscosity at 25°C of the titanium dioxide paste is within the specific range set forth above in this manner, the titanium dioxide paste can be provided with suitable viscosity (rheological properties and thixotropy), and screen printing properties of the titanium dioxide paste can be enhanced.

Note that the viscosity at 25°C of the titanium dioxide paste can be measured by a method described in the EXAMPLES section of the present specification.

The presently disclosed titanium dioxide paste preferably does not substantially comprise a binder. When the titanium dioxide paste does not substantially contain a binder in this manner, electrical conductivity of a porous semiconductor layer can be increased.

Moreover, the present disclosure aims to advantageously solve the problem set forth above, and a presently disclosed porous semiconductor electrode substrate comprises: a conductive substrate; and a porous semiconductor layer formed by applying any one of the titanium dioxide pastes set forth above onto the conductive substrate and drying the titanium dioxide paste that has been applied. A porous semiconductor electrode substrate that is obtained by applying any one of the titanium dioxide pastes set forth above onto a conductive substrate and drying the applied titanium dioxide paste to form a porous semiconductor layer in this manner has excellent close adherence of the porous semiconductor layer and the conductive substrate.

Furthermore, the present disclosure aims to advantageously solve the problem set forth above, and a presently disclosed photoelectrode comprises: the porous semiconductor electrode substrate set forth above; and a dye or light-absorbing material adsorbed to the porous semiconductor layer of the porous semiconductor electrode substrate. A photoelectrode that includes the porous semiconductor electrode substrate set forth above in this manner has excellent close adherence of a porous semiconductor layer and a conductive substrate.

Also, the present disclosure aims to advantageously solve the problem set forth above, and a presently disclosed dye-sensitized solar cell comprises the porous semiconductor electrode substrate set forth above. A dye-sensitized solar cell that includes the porous semiconductor electrode substrate set forth above in this manner has excellent close adherence of a porous semiconductor layer and a conductive substrate and high performance.

(Advantageous Effect)

According to the present disclosure, it is possible to provide a titanium dioxide paste that can form a porous semiconductor layer having excellent close adherence with a conductive substrate.

Moreover, according to the present disclosure, it is possible to provide a porous semiconductor electrode substrate having excellent close adherence of a porous semiconductor layer and a conductive substrate.

Furthermore, according to the present disclosure, it is possible to provide a photoelectrode and a dye-sensitized solar cell that include this porous semiconductor electrode substrate.

BRIEF DESCRIPTION OF THE DRAWING

In the accompanying drawing,

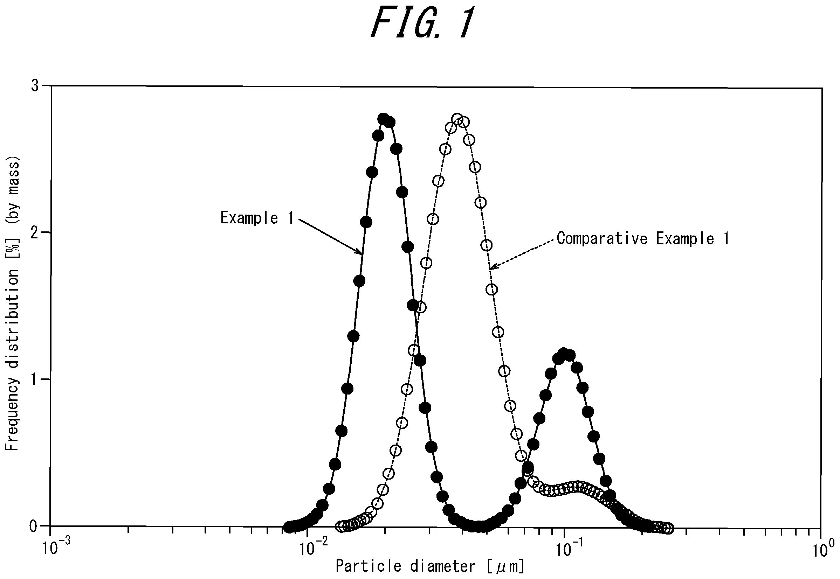

FIG. 1 is a graph of curves indicating frequency distribution by mass (vertical axis) against particle diameter (horizontal axis) for titanium dioxide nanoparticles in titanium dioxide pastes of Example 1 and Comparative Example 1.

DETAILED DESCRIPTION

The following provides a detailed description of embodiments of the present disclosure.

The presently disclosed titanium dioxide paste can be used in production of the presently disclosed porous semiconductor electrode substrate. Moreover, the presently disclosed porous semiconductor electrode substrate includes a porous semiconductor layer formed using the presently disclosed titanium dioxide paste. Furthermore, the presently disclosed porous semiconductor electrode substrate can be used in production of a presently disclosed photoelectrode for a dye-sensitized solar cell. Also, the presently disclosed dye-sensitized solar cell includes the presently disclosed porous semiconductor electrode substrate.

(Titanium dioxide paste)

Features of the presently disclosed titanium dioxide paste are that it contains titanium dioxide nanoparticles and water and has a pH within a specific range. The presently disclosed titanium dioxide paste makes it possible to form a porous semiconductor layer having excellent close adherence with a conductive substrate. Therefore, by using a porous semiconductor layer that has been formed using the presently disclosed titanium dioxide paste, it becomes difficult for electrolyte solution to erode an interface between the porous semiconductor layer and a conductive substrate in a dye-sensitized solar cell, and peeling of the porous semiconductor layer from the conductive substrate can be inhibited.

Note that the term "paste" as used in the present specification refers to a dispersion in which solid particles are dispersed in a liquid such as water serving as a dispersion medium, and that has fluidity and high viscosity.

In the presently disclosed titanium dioxide paste, it is normally the case that the titanium dioxide nanoparticles, which are solid particles, are dispersed in water serving as a dispersion medium.

Note that the presently disclosed titanium dioxide paste may optionally contain other components besides the titanium dioxide nanoparticles and water mentioned above.

<Titanium dioxide nanoparticles>

The titanium dioxide nanoparticles contained in the titanium dioxide paste are a component that can function as a semiconductor in a porous semiconductor electrode substrate included in a dye-sensitized solar cell.

«Frequency distribution obtained through particle size distribution measurement»

The number of peaks present on a curve indicating a frequency distribution obtained through particle size distribution measurement, by mass, of the titanium dioxide nanoparticles is normally two or more, and is preferably two. When the number of peaks present on the curve indicating a frequency distribution obtained through particle size distribution measurement, by mass, of the titanium dioxide nanoparticles is two or more, it is possible to densify a porous semiconductor layer and further increase close adherence of the porous semiconductor layer and a conductive substrate, and it is also possible to reduce transmittance of the porous semiconductor layer and increase photoelectric conversion efficiency of a dye-sensitized solar cell.

Note that the curve indicating a frequency distribution obtained through particle size distribution measurement, by mass, of the titanium dioxide nanoparticles is obtained through measurement of the presently disclosed titanium dioxide paste by ultrasound attenuation spectroscopy.

In this ultrasound attenuation spectroscopy, the titanium dioxide paste is irradiated with ultrasound to cause relative motion of the titanium dioxide nanoparticles in the titanium dioxide paste relative to the dispersion medium, such as water. The attenuation rate of sound energy caused by this relative motion is measured relative to generated sound energy, and a particle size distribution is determined from a characteristic thereof.

More specifically, the titanium dioxide paste is irradiated with ultrasound of a certain frequency from one oscillator, ultrasound is received by another oscillator at the opposite side, and the proportion of ultrasound that is attenuated therebetween (i.e., the attenuation rate) is measured. In order to increase the reliability of measured values, measurement is performed with varying distance between the oscillators, and an attenuation rate per unit amount is calculated. Theoretical curve fitting is then performed with respect to an obtained spectrum of ultrasound frequency vs attenuation rate to obtain a curve indicating a frequency distribution according to particle size distribution measurement, by mass, of the titanium dioxide nanoparticles.

Note that the term "peak" as used in the present specification refers to "a section protruding relative to the baseline", and the term "peak top" as used in the present specification refers to "a point on a peak where a maximum value of frequency distribution according to particle size distribution measurement is displayed".

In a case in which the curve indicating a frequency distribution obtained through particle size distribution measurement, by mass, of the titanium dioxide nanoparticles has two or more peaks, the two or more peaks preferably include a fine particle peak having a peak top at a particle diameter of not less than 10 nm and not more than 40 nm and a coarse particle peak having a peak top at a particle diameter of not less than 60 nm and not more than 200 nm. When the two or more peaks of the curve indicating a frequency distribution obtained through particle size distribution measurement, by mass, of the titanium dioxide nanoparticles include a fine particle peak and a coarse particle peak having peak tops within the specific ranges set forth above in this manner, close adherence of a porous semiconductor layer and a conductive substrate can be even further increased, and photoelectric conversion efficiency of a dye-sensitized solar cell can be further increased.

Note that the range for the peak top of the fine particle peak is preferably a particle diameter of not less than 15 nm and not more than 25 nm and the range for the peak top of the coarse particle peak is preferably a particle diameter of not less than 80 nm and not more than 120 nm from a viewpoint of causing good packing of fine particles between coarse particles so as to increase packing of a porous semiconductor layer.

Moreover, a ratio of the frequencies at the peak tops described above (frequency at peak top of coarse particle peak/frequency at peak top of fine particle peak) is preferably more than 1/3. When the ratio of the frequency at the peak top of the coarse particle peak and the frequency at the peak top of the fine particle peak (frequency at peak top of coarse particle peak/frequency at peak top of fine particle peak) is more than the specific value set forth above in this manner, close adherence of a porous semiconductor layer and a conductive substrate can be even further increased, and photoelectric conversion efficiency of a dye-sensitized solar cell can be further increased.

«Average particle diameter»

The average particle diameter of the titanium dioxide nanoparticles in the titanium dioxide paste is preferably 5 nm or more, and more preferably 22 nm or more, and is preferably 80 nm or less.

Note that unless otherwise specified, the term "average particle diameter" as used in the present specification represents the particle diameter (D50) at which, in a frequency distribution based on a particle size distribution by mass measured by ultrasound attenuation spectroscopy, cumulative mass calculated from a small diameter end of the distribution reaches 50%.

«Other properties, etc.»

The titanium dioxide nanoparticles may be crystalline. In a case in which the titanium dioxide nanoparticles are crystalline, the crystal structure may be anatase, brookite, rutile, or the like, for example, without any specific limitations.

The particle shape of the titanium dioxide nanoparticles can be an undefined shape, a spherical shape, a polyhedral shape, a fibrous shape, a nanotube shape, or the like, for example, without any specific limitations.

No specific limitations are placed on the state of titanium dioxide nanoparticles that are used to produce the titanium dioxide paste. For example, titanium dioxide nanoparticles may be used in a powder state or may be used in the state of a sol (dispersion liquid) having the titanium dioxide nanoparticles dispersed in a dispersion medium such as water.

The crystal structure, particle shape, state, and so forth of the titanium dioxide nanoparticles described above can differ depending on the production method of the titanium dioxide nanoparticles.

Examples of production methods of titanium dioxide nanoparticles that can be used include, but are not specifically limited to, a liquid phase method in which a titanium compound such as titanium tetrachloride or titanyl sulfate is hydrolyzed and a gas phase method in which mixed combustion of titanium tetrachloride and oxygen or an oxygen-containing gas is performed. Note that various conditions in the production method of the titanium dioxide nanoparticles can be set as appropriate within ranges with which the desired effects are obtained.

Moreover, the production method of the titanium dioxide nanoparticles may be a single production method, but is preferably a method in which a plurality of types of titanium dioxide nanoparticles differing in terms of crystal structure, particle shape, state, and/or the like that are obtained by different production methods are mixed in any proportions.

Moreover, by appropriately adjusting conditions for the proportions in which the plurality of types of titanium dioxide nanoparticles are mixed, for example, titanium dioxide nanoparticles displaying the frequency distribution described above can easily be produced as a mixture.

Also note that the production method of the titanium dioxide nanoparticles may be implemented as part of a production method of the titanium dioxide paste.

<Dispersion medium containing water>

The presently disclosed titanium dioxide paste contains water as a dispersion medium for dispersing the titanium dioxide nanoparticles described above. Note that in a situation in which an aqueous sol having titanium dioxide nanoparticles dispersed in water is used in production of the titanium dioxide paste, water contained in this aqueous sol may be used in that form as the water contained in the titanium dioxide paste.

The presently disclosed titanium dioxide paste may also contain another dispersion medium besides water with the aim of adjusting viscosity and improving drying properties.

No specific limitations are placed on the other dispersion medium so long as the desired effects are obtained, and examples thereof include ethylene glycol mono-tert-butyl ether, diacetone alcohol, and linear and branched alcohols having a carbon number of 3 to 10 described in WO2016/006227A1.

Note that the content of the other dispersion medium in the presently disclosed titanium dioxide paste can be adjusted as appropriate within a range with which the desired effects are obtained.

In a case in which water and another dispersion medium are used together as a dispersion medium, the proportional content of water in the dispersion medium is preferably 80 mass% or more, and more preferably 83 mass% or more, and is preferably 90 mass% or less, and more preferably 87 mass% or less.

<Other components>

The presently disclosed titanium dioxide paste may contain other components besides the titanium dioxide nanoparticles and water described above. Examples of such other components include binders, particles other than titanium dioxide nanoparticles, and acids.

«Binder»

Although the presently disclosed titanium dioxide paste may contain a binder formed of a resin or the like with the aim of viscosity enhancement, for example, the presently disclosed titanium dioxide paste preferably does not substantially contain a binder. When the presently disclosed titanium dioxide paste does not substantially contain a binder, a binder does not remain in a porous semiconductor layer formed using the titanium dioxide paste even in a situation in which the porous semiconductor layer is formed at low-temperature (for example, 150°C or lower), and thus sufficiently high electrical conductivity of the porous semiconductor layer can be ensured.
Note that the phrase "does not substantially contain a binder" means that the content of organic material having a boiling point of 150°C or higher at a pressure of 1 atm is 1 mass% or less in terms of solid content. Also note that the content of organic material having a boiling point of 150°C or higher at a pressure of 1 atm is preferably 0.5 mass% or less in terms of solid content, and is more preferably 0 mass%.

«Other particles»

The presently disclosed titanium dioxide paste may contain other particles besides the titanium dioxide nanoparticles described above.
No specific limitations are placed on other particles that can be used so long as the desired effects are obtained, and examples include particles of semiconductors other than titanium dioxide, inorganic compounds other than semiconductors, and so forth such as described in WO2016/006227A1.
Note that the content of the other particles in the presently disclosed titanium dioxide paste can be adjusted as appropriate within a range with which the desired effects are obtained.

«Acid»

The presently disclosed titanium dioxide paste may contain an acid with the aim of pH adjustment.
Specific examples of acids that can be used include hydrochloric acid and the like, though no specific limitations are made so long as the desired effects are obtained.
In a situation in which an aqueous sol having titanium dioxide nanoparticles dispersed in water is used in production of the titanium dioxide paste, an acid such as hydrochloric acid that may be contained in the aqueous sol as a residue can be used in that form as an acid contained in the titanium dioxide paste. Moreover, a separate acid to the aforementioned aqueous sol may be added during mixing of components in production of the titanium dioxide paste.
Note that the content of an acid in the titanium dioxide paste is preferably adjusted as appropriate such that the pH of the titanium dioxide paste is within a specific range described below.

<pH of titanium dioxide paste>

The pH of the presently disclosed titanium dioxide paste is required to be 2.6 or higher, and is preferably 2.7 or higher, more preferably 2.8 or higher, and even more preferably 2.9 or higher. Moreover, the pH of the presently disclosed titanium dioxide paste is required to be 3.5 or lower, and is preferably 3.3 or lower, more preferably 3.1 or lower, and even more preferably 3.0 or lower. When the pH of the titanium dioxide paste is not lower than any of the lower limits set forth above, it is possible to sufficiently increase the viscosity of the titanium dioxide paste and maintain good screen printing properties, and it is also possible to inhibit excessive erosion of a conductive substrate and ensure sufficiently high electrical conductivity of a porous semiconductor electrode substrate. On the other hand, when the pH of the titanium dioxide paste is not higher than any of the upper limits set forth above, a porous semiconductor layer having excellent close adherence with a conductive substrate can be formed through a suitable degree of erosion of the conductive substrate. Moreover, when the pH of the titanium dioxide paste is not higher than any of the upper limits set forth above, it is possible to increase dispersibility of the titanium dioxide nanoparticles in the titanium dioxide paste and maintain good screen printing properties of the titanium dioxide paste, and it is also possible to increase light absorbance (reduce transmittance) of a porous semiconductor layer and maintain good performance, such as photoelectric conversion efficiency, of a dye-sensitized solar cell (DSC).

Note that the method of adjustment of the pH of the titanium dioxide paste is described further below in relation to the production method of the titanium dioxide paste.

<Solid content concentration of titanium dioxide paste>

The solid content concentration of the presently disclosed titanium dioxide paste is preferably 45 mass% or more, and more preferably 48 mass% or more, and is preferably 55 mass% or less, and more preferably 52 mass% or less. When the solid content concentration of the titanium dioxide paste is within any of the specific ranges set forth above, screen printing properties of the titanium dioxide paste can be enhanced.

Note that the proportion constituted by the titanium dioxide nanoparticles among solid content in the presently disclosed titanium dioxide paste is preferably not less than 99 mass% and not more than 100 mass%.

<Viscosity of titanium dioxide paste>

The viscosity at 25°C of the presently disclosed titanium dioxide paste is preferably 10 Pa·s or more, and more preferably 13 Pa·s or more, and is preferably 24 Pa·s or less, and more preferably 20 Pa·s of less. When the viscosity at 25°C of the titanium dioxide paste is within any of the specific ranges set forth above, screen printing properties of the titanium dioxide paste can be enhanced.

Note that the viscosity at 25°C of the titanium dioxide paste can be adjusted through the solid content concentration of the titanium dioxide paste, for example.

<Production method of titanium dioxide paste>

The production method of the titanium dioxide paste is not specifically limited and can, for example, be a method in which a powder of titanium dioxide nanoparticles and other optional components are added to and mixed with an aqueous sol having titanium dioxide nanoparticles dispersed in water, and then a dispersing device is used to disperse components such as the powder of titanium dioxide nanoparticles in the aqueous sol.

The water contained in the aqueous sol can be used in that form as the water that is contained in the titanium dioxide paste. Moreover, water that is separate to the aqueous sol may be added in the operations described above.

The dispersing device can be a commonly known dispersing device such as a three-roll mill, a paint conditioner, a homogenizer, an ultrasonic stirrer, a high-speed disper blade, or a combined rotation and revolution mixing conditioner.

No specific limitations are placed on the method by which the pH of the titanium dioxide paste is adjusted. For example, the pH of the titanium dioxide paste can be adjusted to within any of the specific ranges set forth above through appropriate setting of the pH of the aqueous sol.

(Porous semiconductor electrode substrate)

The presently disclosed porous semiconductor electrode substrate includes a conductive substrate and a porous semiconductor layer formed by applying the titanium dioxide paste set forth above onto the conductive substrate and performing heated drying of the titanium dioxide paste that has been applied.

As a result of the presently disclosed porous semiconductor electrode substrate including a porous semiconductor layer formed using the presently disclosed titanium dioxide paste set forth above on a conductive substrate, the presently disclosed porous semiconductor electrode substrate has excellent close adherence of the porous semiconductor layer and the conductive substrate.

<Conductive substrate>

The conductive substrate can, for example, be a substrate that is itself electrically conductive, such as a metal substrate formed of a metal material such as titanium or stainless steel; or a substrate obtained by forming a conductive layer on a base material (support) formed of a material such as an inorganic material (for example, glass) or an organic material (for example, plastic). Note that the material of the conductive substrate can be selected as appropriate depending on the application of the porous semiconductor electrode substrate and may be a transparent material in a case in which the porous semiconductor electrode substrate is required to have light transmittivity, for example.

From a viewpoint of producing a dye-sensitized solar cell having excellent flexibility, it is preferable to use a conductive substrate including a support formed of a flexible plastic, and particularly preferable to use a conductive substrate including a transparent plastic film as a support (i.e., to use a transparent conductive plastic film).

A transparent conductive plastic film includes a transparent plastic film as a support and a conductive layer formed on the transparent plastic film. The transparent plastic film serving as a support is preferably formed of a low cost material that is colorless and that has excellent transparency, heat resistance, chemical resistance, and gas barrier properties. Examples of materials for the transparent plastic film serving as a support that are preferable from such viewpoints include polyethylene terephthalate (PET), polyethylene naphthalate (PEN), syndiotactic polystyrene (SPS), polyphenylene sulfide (PPS), polycarbonate (PC), polyarylate (PAr), polysulfone (PSF), polyester sulfone (PES), polyetherimide (PEI), and transparent polyimide (PI). Of these materials, polyethylene terephthalate (PET) and polyethylene naphthalate (PEN) are preferable from viewpoints of chemical resistance, cost, and so forth.

In the conductive layer of the transparent conductive plastic film, a metal such as platinum, gold, silver, copper, aluminum, or indium; a carbon-based material such as carbon nanotubes; a conductive metal oxide such as indium-tin complex oxide or tin oxide; or the like can be used as a conductive material. Of these materials, a conductive metal oxide is preferable from a viewpoint of optical transparency, with indium-tin complex oxide (ITO) and zinc oxide being particularly preferable. The transmittance of indium-tin complex oxide (ITO) preferably has a peak at 500 nm to 600 nm from a viewpoint of photoelectric conversion efficiency and visibility of a display or the like.

A surface resistance value of the conductive layer is preferably 20 Ω/sq. or less, more preferably 10 Ω/sq. or less, and even more preferably 3 Ω/sq. or less.

Auxiliary lead lines can be provided on the conductive layer by patterning or the like for the purpose of current collection. Such auxiliary lead lines are normally formed using a low-resistance metal material such as copper, silver, aluminum, platinum, gold, titanium, or nickel. In the case of a conductive layer that is patterned with such auxiliary lead lines, the surface resistance value is measured as a resistance value of the surface where an auxiliary lead line is included, and this value is preferably 10 Ω/sq. or less, and more preferably 3 Ω/sq. or less.

The thickness of the transparent conductive plastic film is preferably not less than 30 μm and not more than 500 μm. When the thickness of the transparent conductive plastic film is not less than the lower limit set forth above, the transparent conductive plastic film has excellent handleability, and deformation is inhibited during drying in formation of the porous semiconductor layer.

<Production method of porous semiconductor electrode substrate>

The presently disclosed porous semiconductor electrode substrate can be produced by applying the presently disclosed titanium dioxide paste set forth above onto the conductive substrate and drying the titanium dioxide paste that has been applied to form a porous semiconductor layer. The porous semiconductor layer that is formed on the conductive substrate has excellent close adherence with the conductive substrate and peeling durability.

The method by which the presently disclosed titanium dioxide paste set forth above is applied onto the conductive substrate can be a screen printing method, a metal mask method, a gravure printing method, or the like, for example, of which, a screen printing method is preferable. Note that the presently disclosed titanium dioxide paste can be diluted and then applied onto the conductive substrate by a method such as a doctor blading method, a squeegee method, or a spraying method.

In a case in which a substrate obtained by forming a conductive layer on a base material (support) formed of a material such as a plastic is used as the conductive substrate (for example, a case in which a transparent conductive plastic film is used), the porous semiconductor layer is formed by applying the titanium dioxide paste onto a surface at the conductive layer-side of the conductive substrate.

The titanium dioxide paste that has been applied can be dried by performing heated drying, for example, but is not specifically limited to being dried in this manner.

The heating temperature in heated drying can be set as appropriate within a heat resistant temperature range of a constituent material of the conductive substrate that is used. For example, in a case in which a conductive substrate including a support formed of a plastic, such as the previously described transparent conductive plastic film, is used, the heating temperature in heated drying is preferably not lower than 120°C and not higher than 160°C from a viewpoint of performing drying efficiently while also inhibiting degradation of the plastic serving as the support caused by heating.

The thickness of the formed porous semiconductor layer is preferably not less than 5 μm and not more than 10 μm. When the thickness of the porous semiconductor layer is not less than the lower limit set forth above, sufficiently high electricity generation by a dye-sensitized solar cell can be ensured. On the other hand, when the thickness of the porous semiconductor layer is not more than the upper limit set forth above, sufficiently high diffusivity of electrons in the porous semiconductor layer can be ensured.

(Photoelectrode)

The presently disclosed photoelectrode includes the porous semiconductor electrode substrate set forth above and a dye or light-absorbing material adsorbed to the porous semiconductor layer of the porous semiconductor electrode substrate. The presently disclosed photoelectrode has excellent close adherence of a porous semiconductor layer and a conductive substrate as a result of including the porous semiconductor electrode substrate set forth above.

The dye or light-absorbing material adsorbed to the porous semiconductor layer of the porous semiconductor electrode substrate is not specifically limited and can, for example, be a dye or light-absorbing material described in WO2016/006227A1.

(Dye-sensitized solar cell)

The presently disclosed dye-sensitized solar cell includes the porous semiconductor electrode substrate set forth above. The presently disclosed dye-sensitized solar cell has excellent close adherence of a porous semiconductor layer and a conductive substrate and high performance as a result of including the porous semiconductor electrode substrate set forth above.

More specifically, the presently disclosed dye-sensitized solar cell includes a dye-sensitized electrode (photoelectrode) in which a dye or light-absorbing material is adsorbed to the porous semiconductor layer of the porous semiconductor electrode substrate set forth above, a counter electrode, and an electrolyte layer disposed between the dye-sensitized electrode and the counter electrode.

The dye or light-absorbing material adsorbed to the porous semiconductor layer of the porous semiconductor electrode substrate is not specifically limited and can, for example, be a dye or light-absorbing material such as previously described in the "Photoelectrode" section.

Moreover, the counter electrode can be a substrate that is obtained by forming a conductive layer on a base material (support) formed of an organic material such as a plastic. The conductive material of the conductive layer included in the counter electrode can be a metal such as platinum, gold, silver, copper, titanium, aluminum, magnesium, or indium; a carbon-based material such as carbon nanotubes; a conductive metal oxide such as indium-tin complex oxide or fluorine-doped tin oxide (FTO); or the like. Of these materials, platinum, titanium, ITO, and carbon-based materials are preferable from a viewpoint of corrosion resistance.

The electrolyte layer disposed between the dye-sensitized electrode and the counter electrode is not specifically limited and can, for example, be an electrolyte solution such as an aqueous electrolyte solution, an organic solvent electrolyte solution, or an ionic liquid electrolyte solution (molten salt electrolyte solution); a P-type semiconductor; or the like described in WO2016/006227 A1.

The presently disclosed dye-sensitized solar cell can be produced by a known method without any specific limitations so long as the porous semiconductor electrode substrate set forth above is used. For example, the presently disclosed dye-sensitized solar cell can be produced using the dye-sensitized electrode (photoelectrode) set forth above. More specifically, the dye-sensitized solar cell can be produced by overlapping the photoelectrode set forth above and a counter electrode, with a spacer interposed therebetween, in a state in which a surface at a side of the photoelectrode where the dye or light-absorbing material is adsorbed to the porous semiconductor layer and a surface at a conductive layer-side of the counter electrode are facing each other, and injecting an electrolyte solution as an electrolyte layer between the photoelectrode and the counter electrode.

EXAMPLES

The following provides a more specific description of the present disclosure based on examples. However, the present disclosure is not limited to these examples.

Various measurements and evaluations in the examples and comparative examples were performed by the following methods.

<Viscosity of titanium dioxide paste>

The viscosity at 25°C of a titanium dioxide paste can be determined through measurement performed using a B-type viscometer connected to a constant temperature water circulator under conditions of a rotation speed of 50 rpm.

<Screen printing properties of titanium dioxide paste>

A transparent conductive plastic film (thickness: 200 $\mu$m; conductive layer-side surface resistance: 15 $\Omega$/sq.) having a conductive layer formed of indium-tin complex oxide (ITO) on a base material made of polyethylene terephthalate (PET) was prepared as a conductive substrate. A titanium dioxide paste was applied by screen printing using a 400-mesh screen to a surface of the conductive substrate at a side where the conductive layer had been formed so as to form a rectangular coating film of 5 mm $\times$ 33 mm. An arbitrarily selected location of 1 cm$^2$ in the coating film that had been formed was visually inspected, and screen printing properties of the titanium dioxide paste were evaluated in accordance with the following standard. Note that less cissing and fewer pinholes in visual inspection of the coating film indicate that the titanium dioxide paste has better screen printing properties.

A: Cissing not observed and pinholes of 1 mm or more in diameter not observed
B: Cissing not observed and 5 or fewer pinholes of 1 mm or more in diameter observed
C: Cissing not observed and more than 5 pinholes of 1 mm or more in diameter observed
D: Cissing observed and numerous pinholes of 1 mm or more in diameter also observed

<Frequency distribution and average particle diameter obtained by particle size distribution measurement of titanium dioxide nanoparticles>

A DT-1202 produced by Nihon Rufuto Co., Ltd. was used to perform measurement by ultrasound attenuation spectroscopy (ultrasound frequency: 1 MHz to 100 MHz) with respect to a titanium dioxide paste as a measurement sample to obtain a curve indicating a frequency distribution based on a particle size distribution, by mass, of titanium dioxide nanoparticles in the titanium dioxide paste. The number of peaks on the obtained curve indicating the frequency distribution and the particle diameter at which a peak top of each peak was present were confirmed.

In addition, the particle diameter (D50) at which cumulative mass calculated from a small diameter end in the frequency distribution (by mass) reached 50% was taken to be the average particle diameter of the titanium dioxide nanoparticles in the titanium dioxide paste.

<Ratio of frequencies at peak tops (frequency at peak top of coarse particle peak/frequency at peak top of fine particle peak)>

In a case in which a curve indicating a frequency distribution (by mass) that was obtained as described above had a coarse particle peak and a fine particle peak, a ratio of frequencies at the peak tops (frequency at peak top of coarse particle peak/frequency at peak top of fine particle peak) was calculated based on the heights of the respective peak tops of the coarse particle peak and the fine particle peak.

<Light transmittance at 530 nm of porous semiconductor layer>

A conductive substrate used in production of a porous semiconductor electrode substrate in each example or comparative example was set in an ultraviolet-visible spectrophotometer (UV1800 produced by Shimadzu Corporation) and baseline measurement was performed for a range of 200 nm to 1100 nm. Next, the produced porous semiconductor electrode substrate (having a porous semiconductor layer formed on the conductive substrate) was set in the ultraviolet-visible spectrophotometer, spectroscopic measurement was performed, and a value of light transmittance at 530 nm was determined for the porous semiconductor layer formed on the conductive substrate.

<Peeling durability of porous semiconductor layer>

For each example or comparative example, a produced porous semiconductor electrode substrate (having a porous semiconductor layer formed on a conductive substrate) was cut to a strip shape of 33 mm $\times$ 50 mm to produce three test specimens. Each of the test specimens was then placed in a 10 mL sample bottle made of glass. Next, 6 mL of electrolyte solution was loaded into the sample bottle and the lid was closed to seal the sample bottle with the test specimen in an immersed state in the electrolyte solution. The sample bottle was placed in a 60°C thermostatic tank (oven) and was left at rest for 3 days. After 3 days, the test specimen was removed from the sample bottle, and the occurrence or absence of peeling of the porous semiconductor layer from the conductive substrate was visually confirmed for the test specimen.

Absence of peeling of the porous semiconductor layer from the conductive substrate indicates that the porous semiconductor layer has excellent close adherence with the conductive substrate.

<Cell performance of dye-sensitized solar cell>

A solar simulator (PEC-L11 produced by Peccell Technologies Inc.) in which an AM1.5G filter was attached to a 150 W xenon lamp light source was used as a light source. The light intensity was adjusted to 1 sun (AM1.5G, 100 mW/cm$^2$ [Class A of JIS C8912]). A produced dye-sensitized solar cell was connected to a sourcemeter (Series 2400 SourceMeter produced by Keithley Instruments) and the following current/voltage characteristic was measured.

Output current was measured while changing bias voltage from 0 V to 0.8 V in 0.01 V units under 1 sun light-irradiation. The output current was measured for each voltage step by, after the voltage had been changed, integrating values from 0.05 seconds after the voltage change to 0.15 seconds after the voltage change. Measurement was also performed while changing the bias voltage in the reverse direction from 0.8 V to 0 V, and an average value for the forward direction and the reverse direction was taken to be the photoelectric current.

Measurement results of the current/voltage characteristic described above were used to calculate the open-circuit voltage (V), the fill factor, and the photoelectric conversion efficiency (%). The short-circuit current density (mA/cm$^2$) was also measured.

<Module durability of dye-sensitized solar cell>

The initial performance of a dye-sensitized solar cell produced in each example or comparative example was evaluated. Next, the dye-sensitized solar cell was loaded into a reliability test tank (IH constant temperature and constant humidity vessel produced by Yamato Scientific Co., Ltd.) that was maintained at a temperature of 60°C and a humidity of 90% RH, and a reliability test was performed by leaving the dye-sensitized solar cell for 500 hours in a light-shielded state without passing of current. The performance of the dye-sensitized solar cell after the reliability test was also evaluated.

A performance maintenance rate (%) was calculated by the following formula using a current value A1 (mA) measured in evaluation of initial performance of the dye-sensitized solar cell and a current value A2 (mA) measured in evaluation of performance of the dye-sensitized solar cell after the reliability test.

$$\text{Performance maintenance rate } (\%) = (A2/A1) \times 100$$

A larger value for the performance maintenance rate indicates that the dye-sensitized solar cell has better module durability.

Note that evaluation of performance of the dye-sensitized solar cell, both initially and after the reliability test, was performed by the following method.

«Performance evaluation»

The dye-sensitized solar cell was irradiated with light equivalent to 1 sun of AM1.5G (JIS C 8912) by a solar simulator (PEC-L15 produced by Peccell Technologies Inc.), and the generated current was measured using an interface resistance meter (VSP produced by Bio-Logic Science Instruments) connected to the dye-sensitized solar cell. Current measurement was performed for approximately 10 seconds, an average value was calculated for data of the final 26 points (data for the final 5 seconds) when the value had stabilized, and a value obtained by further multiplying by -1 was taken to be the current value (mA).

(Example 1)

<Production of titanium dioxide paste>

A powder of titanium dioxide nanoparticles A (average particle diameter: 30 nm) and a powder of titanium dioxide nanoparticles B (average particle diameter: 40 nm) were added to an aqueous sol (solid content concentration: 18 mass% to 20 mass%; pH 2.6) having titanium dioxide nanoparticles D (average particle diameter: 12 nm) dispersed in water such as to be mixed with a mass ratio, in terms of solid content, of A:B:D = 47:30:23. Note that the average particle diameters of the titanium dioxide nanoparticles A and B are each a value that was calculated from particle diameter distribution measurement through scanning electron microscope observation. In addition, ethylene glycol mono-tert-butyl ether (EGTBE) and diacetone alcohol (DAA) were added such that the concentrations thereof in a titanium dioxide paste were 4.8 mass% of EGTBE and 1.9 mass% of DAA to thereby obtain a mixture. This mixture was subjected to 10 passes through a desktop three-roll mill to cause dispersion and thereby produce a titanium dioxide paste. The obtained titanium dioxide paste was confirmed to have a pH of 2.9 and a solid content concentration of 49 mass%.

The viscosity at 25°C and screen printing properties of the titanium dioxide paste were measured and evaluated. The results are shown in Table 1.

Moreover, a frequency distribution and average particle diameter obtained through particle size distribution measurement of titanium dioxide nanoparticles in the titanium dioxide paste were determined. A curve indicating the frequency distribution obtained through particle size distribution measurement had a fine particle peak having a peak top at a particle diameter of 20 nm and a coarse particle peak having a peak top at a particle diameter of 100 nm. The frequency distribution obtained through particle size distribution measurement of the titanium dioxide nanoparticles in the titanium dioxide paste is illustrated in FIG. 1.

Note that a ratio of the frequencies at the peak tops (frequency at peak top of coarse particle peak/frequency at peak top of fine particle peak) was more than 1/3.

<Production of porous semiconductor electrode substrate>

A transparent conductive plastic film (thickness: 200 $\mu$m; conductive layer-side surface resistance: 15 $\Omega$/sq.) including a conductive layer formed of ITO on a base material made of PET was prepared. In order to lower surface resistance at the conductive layer-side of the transparent conductive plastic film, a silver dispersion paste was patterned on the conductive layer in a parallel line form with a line width of 100 $\mu$m, a thickness of 20 $\mu$m, and a spacing of 10 mm by screen printing so as to form auxiliary lead lines for current collection formed of silver. A polyester resin was applied as a protective film onto these auxiliary lead lines for current collection with a width of 250 $\mu$m and a thickness of 4 $\mu$m so as to completely protect the auxiliary lead lines for current collection. A surface resistance value at the conductive layer-side of the transparent conductive plastic film on which the auxiliary lead lines for current collection had been formed was 3 $\Omega$/sq.

The transparent conductive plastic film on which these auxiliary lead lines for current collection had been formed was cut to 2 cm $\times$ 10 cm to obtain a conductive substrate, a pattern in which 6 circles of 6 mm in diameter were arranged with a spacing of 1.5 cm was printed on a surface at the conductive layer-side of this conductive substrate by screen printing using the titanium dioxide paste described above and a 200-mesh screen, and heated drying (10 minutes at 150°C) was subsequently performed to form a porous semiconductor layer having a film thickness of 8.2 $\mu$m. In this manner, a porous semiconductor electrode substrate having a porous semiconductor layer formed on the surface at the conductive layer-side of the conductive substrate was obtained.

The porous semiconductor layer formed on the porous semiconductor electrode substrate was used to measure and evaluate light transmittance, close adherence with the conductive substrate, and peeling durability. The results are shown in Table 1.

<Production of dye-sensitized solar cell>

The porous semiconductor electrode substrate was immersed in a sensitizing dye solution obtained by dissolving a tetrabutyl ammonium salt of a bis(isocyanate) bis(bipyridyl) Rh complex (N719) as a Ru bipyridyl complex dye in a mixed solvent of acetonitrile:tert-butanol (1:1 (volume ratio)) such as to have a concentration of $3 \times 10^{-4}$ mol/L and was left at 40°C under stirring for 60 minutes to cause adsorption of the dye to the porous semiconductor layer of the porous semiconductor electrode substrate, and thereby produce a dye-sensitized electrode (photoelectrode).

A transparent conductive plastic film (thickness: 200 $\mu$m; ITO film-side surface resistance value: 15 $\Omega$/sq.) including an ITO film formed on a base material made of PET was coated with a platinum film of 100 nm in thickness by sputtering on the surface at the ITO film-side thereof so as to produce a conductive film (surface resistance: 0.8 $\Omega$/sq.) including a conductive layer formed of two layers (ITO film and platinum film) as a counter electrode.

The photoelectrode was cut to 2 cm $\times$ 1.5 cm such that a porous semiconductor layer having a circular shape of 6 mm in diameter was at the center thereof. The counter electrode was also cut to 2 cm $\times$ 1.5 cm, and then an injection opening (diameter: 1 mm) for electrolyte solution was formed. The photoelectrode and the counter electrode were overlapped with an ionomer resin film (Himilan 1652 produced by Dupont-Mitsui Polychemicals Co., Ltd.) of 25 $\mu$m in thickness interposed therebetween in a state in which the surface at the porous semiconductor layer-side of the photoelectrode where the dye had adsorbed and the surface at the conductive layer-side of the counter electrode faced each other, and were subjected to 5 minutes of curing treatment at 110°C. Next, an organic solvent electrolyte solution containing $\gamma$-butyrolactone, tetrabutylammonium iodide, butylmethylimidazolium iodide, and N-methylbenzimidazole was injected via the injection opening through capillary action. Finally, cover glass onto which a UV curable resin had been applied was overlapped on the injection opening, and spot irradiation with UV light was performed to block the injection opening. By blocking the opening in this manner, a dye-sensitized solar cell was produced.

The cell performance and module durability of the produced dye-sensitized solar cell were evaluated. The results are shown in Table 1.

(Example 2)

A titanium dioxide paste, a porous semiconductor electrode substrate, and a dye-sensitized solar cell were produced, and various measurements and evaluations were performed in the same way as in Example 1 with the exception that in production of the titanium dioxide paste in Example 1, the pH of the aqueous sol containing the titanium dioxide nanoparticles D was changed from 2.6 to 2.9 so as to change the pH of the obtained titanium dioxide paste from 2.9 to 3.1. The results are shown in Table 1.

(Comparative Example 1)

A titanium dioxide paste, a porous semiconductor electrode substrate, and a dye-sensitized solar cell were produced, and various measurements and evaluations were performed in the same way as in Example 1 with the exception that in mixing of the powders of titanium dioxide nanoparticles with the aqueous sol in production of the titanium dioxide paste in Example 1, a powder of titanium dioxide nanoparticles A (average particle diameter: 30 nm), a powder of titanium dioxide nanoparticles B (average particle diameter: 40 nm), and a powder of titanium dioxide nanoparticles C (average particle diameter: 50 nm) were added to an aqueous sol (solid content concentration: 18 mass% to 21 mass%; pH 3.2) having titanium dioxide nanoparticles E (average particle diameter: 18 nm) dispersed in water such as to be mixed with a mass ratio, in terms of solid content, of A:B:C:E = 32.5:32.5:12:23. The obtained titanium dioxide paste had a pH of 3.7. Note that the average particle diameter of the titanium dioxide nanoparticles C is a value that was calculated from particle diameter distribution measurement through scanning electron microscope observation. The results are shown in Table 1.

A curve indicating a frequency distribution obtained through particle size distribution measurement of titanium dioxide nanoparticles in the titanium dioxide paste had a fine particle peak having a peak top at a particle diameter of 38 nm and a coarse particle peak having a peak top at a particle diameter of 112 nm. The frequency distribution of the titanium dioxide nanoparticles in the titanium dioxide paste is illustrated in FIG. 1.

Note that a ratio of the frequencies at the peak tops (frequency at peak top of coarse particle peak/frequency at peak top of fine particle peak) was not more than 1/3.

(Comparative Example 2)

A titanium dioxide paste, a porous semiconductor electrode substrate, and a dye-sensitized solar cell were produced, and various measurements and evaluations were performed in the same way as in Comparative Example 1 with the exception that in production of the titanium dioxide paste in Comparative Example 1, the pH of the aqueous sol containing the titanium dioxide nanoparticles E was changed from 3.2 to 3.7 so as to change the pH of the obtained titanium dioxide paste from 3.7 to 4.1. The results are shown in Table 1.

(Comparative Example 3)

A titanium dioxide paste, a porous semiconductor electrode substrate, and a dye-sensitized solar cell were produced, and various measurements and evaluations were performed in the same way as in Comparative Example 1 with the exception that in production of the titanium dioxide paste in Comparative Example 1, the pH of the aqueous sol containing the titanium dioxide nanoparticles E was changed from 3.2 to 4.0 so as to change the pH of the obtained titanium dioxide paste from 3.7 to 4.5. The results are shown in Table 1.

Table 1

| | | | Example 1 | Example 2 | Comparative Example 1 | Comparative Example 2 | Comparative Example 3 |
|---|---|---|---|---|---|---|---|
| Composition of titanium dioxide nanoparticles (mass%) | Powder | Titanium dioxide nanoparticles A (average particle diameter: 30 nm) | 47 | 47 | 32.5 | 32.5 | 32.5 |
| | | Titanium dioxide nanoparticles B (average particle diameter: 40 nm) | 30 | 30 | 32.5 | 32.5 | 32.5 |
| | | Titanium dioxide nanoparticles C (average particle diameter: 50 nm) | - | - | 12 | 12 | 12 |
| | Aqueous sol | Titanium dioxide nanoparticles D (average particle diameter: 12 nm) | 23 | 23 | - | - | - |
| | | Titanium dioxide nanoparticles E (average particle diameter: 18 nm) | - | - | 23 | 23 | 23 |
| | Total | | 100 | 100 | 100 | 100 | 100 |
| Frequency distribution obtained through particle size distribution measurement of titanium dioxide nanoparticles | Number of peaks | | 2 | 2 | 2 | 2 | 2 |
| | Particle diameter at peak top of line particle peak (nm) | | 20 | 20 | 38 | 38 | 38 |
| | Particle diameter at peak top of coarse particle peak (nm) | | 100 | 100 | 112 | 112 | 112 |
| | Coarse particle peak/fine particle peak (peak top frequency ratio) | | > 1/3 | > 1/3 | ≤ 1/3 | ≤ 1/3 | ≤ 1/3 |
| Average particle diameter of titanium dioxide nanoparticles (nm) | | | 22 | 22 | 36 | 36 | 36 |
| Titanium dioxide paste | pH | | 2.9 | 3.1 | 3.7 | 4.1 | 4.5 |
| | Viscosity at 25°C (Pa·s) | | 13 | 16 | 22 | 26 | 30 |
| | Solid content concentration (mass%) | | 49 | 49 | 49 | 49 | 49 |
| | Screen printing properties | | A | A | A | B | C |

EP 3 919 443 A1

(continued)

|  |  | Example 1 | Example 2 | Comparative Example 1 | Comparative Example 2 | Comparative Example 3 |
|---|---|---|---|---|---|---|
| Porous semiconductor layer | Light transmittance at 530 nm (%) | 1.6 | 2.2 | 7.8 | 9.3 | 9.3 |
|  | Peeling durability | No peeling | No peeling | Peeling | Peeling | Peeling |
| Dye-sensitized solar cell | Short-circuit current density (mA/cm$^2$) | 7.96 | 7.96 | 5.96 | 5.96 | 5.96 |
|  | Open-circuit voltage (V) | 0.68 | 0.68 | 0.68 | 0.68 | 0.68 |
|  | Fill factor | 0.64 | 0.64 | 0.64 | 0.64 | 0.64 |
|  | Photoelectric conversion efficiency (%) | 3.47 | 3.47 | 2.59 | 2.59 | 2.59 |
|  | Module durability (performance maintenance rate after 500 hr reliability test at 60°C and 90% RH) | 95 | 93 | 86 | 83 | 81 |

It can be seen from Table 1 that a porous semiconductor layer having excellent close adherence with a conductive substrate can be formed using the titanium dioxide pastes of Examples 1 and 2, which each contain titanium dioxide nanoparticles and water and have a pH within the prescribed range.

On the other hand, it can be seen that a porous semiconductor layer having excellent close adherence with a conductive substrate cannot be formed using the titanium dioxide pastes of Comparative Examples 1 to 3, which each have a pH outside of the prescribed range.

INDUSTRIAL APPLICABILITY

According to the present disclosure, it is possible to provide a titanium dioxide paste that can form a porous semiconductor layer having excellent close adherence with a conductive substrate.

Moreover, according to the present disclosure, it is possible to provide a porous semiconductor electrode substrate having excellent close adherence of a porous semiconductor layer and a conductive substrate.

Furthermore, according to the present disclosure, it is possible to provide a photoelectrode and a dye-sensitized solar cell that include this porous semiconductor electrode substrate.

**Claims**

1. A titanium dioxide paste comprising titanium dioxide nanoparticles and water, and having a pH of not lower than 2.6 and not higher than 3.5.

2. The titanium dioxide paste according to claim 1, wherein a curve indicating a frequency distribution obtained through particle size distribution measurement, by mass, of the titanium dioxide nanoparticles has at least two peaks.

3. The titanium dioxide paste according to claim 2, wherein the at least two peaks include a fine particle peak having a peak top at a particle diameter of not less than 10 nm and not more than 40 nm and a coarse particle peak having a peak top at a particle diameter of not less than 60 nm and not more than 200 nm.

4. The titanium dioxide paste according to claim 3, wherein a ratio of frequency at the peak top of the coarse particle peak relative to frequency at the peak top of the fine particle peak is more than 1/3.

5. The titanium dioxide paste according to any one of claims 1 to 4, having a solid content concentration of not less than 45 mass% and not more than 55 mass%.

6. The titanium dioxide paste according to any one of claims 1 to 5, having a viscosity at 25°C of not less than 10 Pa·s and not more than 24 Pa·s.

7. The titanium dioxide paste according to any one of claims 1 to 6, not substantially comprising a binder.

8. A porous semiconductor electrode substrate comprising: a conductive substrate; and a porous semiconductor layer formed by applying the titanium dioxide paste according to any one of claims 1 to 7 onto the conductive substrate and drying the titanium dioxide paste that has been applied.

9. A photoelectrode comprising:

   the porous semiconductor electrode substrate according to claim 8; and
   a dye or light-absorbing material adsorbed to the porous semiconductor layer of the porous semiconductor electrode substrate.

10. A dye-sensitized solar cell comprising the porous semiconductor electrode substrate according to claim 8.

## FIG. 1

## INTERNATIONAL SEARCH REPORT

| International application No. |
|---|
| PCT/JP2020/002810 |

### A. CLASSIFICATION OF SUBJECT MATTER
C01G 23/047(2006.01)i; H01G 9/20(2006.01)i
FI: C01G23/047; H01G9/20 111A; H01G9/20 113B

According to International Patent Classification (IPC) or to both national classification and IPC

### B. FIELDS SEARCHED

Minimum documentation searched (classification system followed by classification symbols)
C01G23/047; H01G9/20

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2012-253004 A (PECCELL TECHNOLOGIES, INC.)<br>20.12.2012 (2012-12-20) paragraphs [0024]-[0035],<br>[0063]-[0074] | 1-4, 7-10<br>5, 6 |
| X<br>A | JP 2005-520314 A (UNIVERSITY OF MASSACHUSETTS)<br>07.07.2005 (2005-07-07) paragraphs [0006], [0024]-<br>[0025], [0053]-[0057] | 1, 5-10<br>2-4 |
| X<br>A | JP 2009-536142 A (CONSTRUCTION RESEARCH &<br>TECHNOLOGY GMBH.) 08.10.2009 (2009-10-08)<br>paragraphs [0028]-[0042] | 1, 5, 7<br>2-4, 6, 8-10 |
| X | WO 2016/006227 A1 (NIPPON ZEON CO., LTD.)<br>14.01.2016 (2016-01-14) paragraphs [0021]-[0035],<br>[0048]-[0060] | 1-10 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 March 2020 (12.03.2020) | 24 March 2020 (24.03.2020) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**
Information on patent family members

International application No.

PCT/JP2020/002810

| Patent Documents referred in the Report | Publication Date | Patent Family | Publication Date |
|---|---|---|---|
| JP 2012-253304 A | 20 Dec. 2012 | (Family: none) | |
| JP 2005-520314 A | 07 Jul. 2005 | US 2003/0056821 A1 paragraphs [0008], [0033]-[0034], [0064]-[0069] WO 2004/006292 A2 EP 1430517 A2 CN 1533611 A KR 10-2004-0100851 A | |
| JP 2009-536142 A | 08 Oct. 2009 | US 2009/0272296 A1 paragraphs [0031]-[0043] WO 2007/128638 A1 EP 2018356 A1 CN 101454257 A | |
| WO 2016/006227 A1 | 14 Jan. 2016 | US 2017/0140880 A1 paragraphs [0043]-[0071], [0088]-[0115] EP 3168193 B1 CN 106470947 A KR 10-2017-0028895 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016006227 A1